# EUROPÄISCHE PATENTSCHRIFT

(11) **EP 1 396 506 B1**
(45) Veröffentlichungstag und Bekanntmachung des Hinweises auf die Patenterteilung: **18.02.2009**
(21) Anmeldenummer: 02020111.7
(22) Anmeldetag: 07.09.2002
(51) Int. Cl.: C08F 8/44, C08F 8/14, C04B 24/26

(54) **Anionpolymere**
Anionic polymers
Polymères anioniques

(43) Veröffentlichungstag der Anmeldung: 10.03.2004
(73) Patentinhaber: Cognis IP Management GmbH, 40589 Düsseldorf (DE)
(72) Erfinder: Valls, Ramon, 08022 Barcelona (ES); Tuduri, Jaime, 08244 Terrassa (Barcelona) (ES)

(56) Entgegenhaltungen:
- EP-A- 0 446 621
- EP-A- 0 448 717
- EP-A- 1 138 697
- WO-A-86/04338
- US-A- 4 340 525
- US-A- 5 516 850
- US-A- 5 614 017

## Beschreibung

### Gebiet der Erfindung

Die Erfindung befindet sich auf dem Gebiet der Polymere und betrifft neue Anionpolymere auf Basis von vernetzten Acrylsäureverbindungen, ein Verfahren zu ihrer Herstellung sowie ihre Verwendung als Hilfsstoffe bei der Verarbeitung von Zement und Beton.

### Stand der Technik

Bei der Herstellung von wässrigen Zementzubereitungen bzw. Beton besteht das Problem, die Viskosität der Masse während Herstellung, Transport und Einsatz so niedrig zu halten, dass ein problemlose Verarbeitung möglich ist, ohne dass die Mischung so dünnflüssig wird, dass sie aus der Form rinnt. Man kann dieses Gleichgewicht mit Hilfe des Wassergehaltes einstellen, in der Regel wird dazu aber eine solche Menge erforderlich sein, dass sich die Zeit zum Aushärten stark verzögert. Aus diesem Zweck werden den Zubereitungen Viskositätsregulatoren zugesetzt, die die Viskosität auch ohne Zusatz größerer Wassermengen im erforderlichen Bereich halten und gleichzeitig die offene Zeit bis zum Abbinden so weit verzögern, dass es nicht während des Transportes schon zu einem Aushärten kommt.

Aus dem Stand der Technik sind verschiedene Polymere sowie deren Verwendung als Zement- bzw. Betonverflüssigungsmittel bekannt. Gegenstand der EP 1090901 A1 (Takemoto) ist ein Verfahren zur Herstellung von Polyetherestern mit durchschnittlichen Molgewichten im Bereich 5.000 bis 40.000, bei dem man zunächst Methoxypolyalkylenglykolether mit Methacrylsäure umsetzt und die so erhaltenen Monomeren in wässriger Lösung polymerisiert. Aus den beiden Druckschriften US 5,614,017 und US 5,670,578 (Arco) sind Polymere bekannt, die man durch Veresterung von unvernetzten Polycarbonsäuren mit Polyethern erhält. Die Reaktion verläuft in zwei Schritten, wobei man die Mischung zunächst auf 120 °C erwärmt, um Wasser zu entfernen und danach auf 170 °C erhitzt, um die eigentliche Veresterung durchzuführen. In der US 6,034,208 (Arco) wird vorgeschlagen, Hydroxy(meth)acrylate mit Alkylenoxiden umzusetzen und die so erhaltenen Addukte dann mit Acrylsäure zu polymerisieren. Gegenstand der US 5,919,300 (Sika) sind Copolymere, die durch gemeinsame Polymerisation von (a) N-Vinylamiden bzw. Lactamen, (b) Estern der Methacrylsäure mit Polyethylenglykolen und (c) Methacrylsulfonsäure erhalten werden. In der US 5,665,158 (Grace) werden Polymere beschrieben, die durch Umsetzung von Poly(meth)acrylsäure mit alkoxylierten Aminen erhalten werden. Die Lehren der beiden Schriften US 6,139,623 und US 6,172,147 (Grace) ergänzen dieses Verfahren dahin gehend, dass abschließend Entschäumer (Tributylphosphat) oder Aniontenside (Alkylethersulfat) zugesetzt werden.

Aus dem Stand der Technik weiterhin bekannt ist die EP 0448717 B1 (Nippon Catalytic Chem. Ind.) aus der Zusatzstoffe für Zementzubereitungen bekannt sind, bei denen es sich um wasserlösliche Polymere handelt, die durch unterschiedliche divalente Gruppen vernetzt sind.

Die bekannten Additive sind jedoch im Hinblick auf ihre anwendungstechnischen Eigenschaften keineswegs befriedigend. In vielen Fällen wird die Viskosität nicht hinreichend herabgesetzt, so dass die Massen beispielsweise schon während des Transportes vom Hersteller zur Baustelle zum Erstarren kommen und nur noch mit hohem technischem Aufwand verarbeitet werden können. In anderen Fällen wird die Viskosität zwar hinreichend erniedrigt, der Effekt erweist sich jedoch als zeitabhängig, d.h. entweder kommt es zu einem völligen Zusammenbruch der Viskosität oder aber zum plötzlichen Erstarren der Masse, was beides natürlich nicht gewünscht ist.

Somit hat die Aufgabe der vorliegenden Erfindung darin bestanden, neue polymere Additive für die Herstellung von wässrigen Zementzubereitungen bzw. Beton, sogenannte "Superplasticizer" zur Verfügung zu stellen, welche frei von den eingangs geschilderten Nachteilen sind und insbesondere über bessere viskositätsregulierende Eigenschaften verfügen.

### Beschreibung der Erfindung

Gegenstand der Erfindung sind neue Anionpolymere, die dadurch erhältlich sind, dass man
(a) olefinisch ungesättigte Carbonsäuren mit Comonomeren vom Typ
   (a1) Dipropylenglycoldiacrylat (DPGDA),
   (a2) Tripropylenglycoldiacrylat (TPGDA),
   (a3) Acrylamidomethylpropansulfonsäure (AMPS), und/oder
   (a4) Acrylsäureethylester (AE), polymerisiert,
(b) die resultierenden Copolymeren mit Alkylpolyalkylenglykolen verestert und
(c) die so erhaltenen Ester mit Basen auf einen pH-Wert von 6 bis 8 einstellt.

Überraschenderweise wurde gefunden, dass die neuen Anionpolymere gegenüber den vergleichbaren Stoffen des Stands der Technik wässrigen Zementzubereitungen bzw. Beton ein verbessertes rheologisches Verhalten verleihen und zudem das Abbinden verzögern.

Ein weiterer Gegenstand der Erfindung betrifft ein Verfahren zur Herstellung der neuen Anionpolymere, bei dem man
(a) olefinisch ungesättigte Carbonsäuren mit Comonomeren vom Typ
   (a1) Dipropylenglycoldiacrylat (DPGDA),
   (a2) Tripropylenglycoldiacrylat (TPGDA),
   (a3) Acrylamidomethylpropansulfonsäure (AMPS), und/oder
   (a4) Acrylsäureethylester (AE), polymerisiert,
(b) die resultierenden Copolymeren mit Alkylpolyalkylenglykolen verestert und
(c) die so erhaltenen Ester mit Basen auf einen pH-Wert von 6 bis 8 einstellt.

### Polymerisation

Im ersten Schritt werden die olefinisch ungesättigten Carbonsäuren mit den Comonomeren polymerisiert. Als ungesättigte Carbonsäuren kommen Acrylsäure, Methacrylsäure sowie deren Gemische in Frage. Das Gewichtsverhältnis der olefinisch ungesättigten Komponenten und der Comonomere kann dabei 90 : 10 bis 99 : 1 betragen, vorzugsweise werden jedoch 1 bis 6 und insbesondere 2 bis 5 Gew.-% der Comonomere bezogen auf die olefinische Komponente eingesetzt. Die Polymerisation kann in an sich bekannter Weise durchgeführt werden, d.h. in Gegenwart von Radikalstartern wie Persulfaten oder Bisulfiten. Nach dem Start der Reaktion wird ein starker Temperaturanstieg beobachtet, wobei man durch geeignete Maßnahmen, beispielsweise Kühlen im Eisbad darauf achtet, dass ein Wert von 110 °C nicht überschritten wird. Die Reaktion kann in organischen Lösemitteln, wie beispielsweise Glykol durchgeführt werden, vorzugsweise kommt aber ein wässriges Medium zum Einsatz. In der Regel weisen die Polymere anschließend ein mittleres Molekulargewicht im Bereich von 1.000 bis 5.000 Dalton auf.

### Veresterung und Neutralisation

In der zweiten Stufe des Verfahrens findet die Bildung von Estern der vernetzten Polyacrylsäureverbindungen mit Alkylpolyalkylenglykolen statt. Zu diesem Zweck kommen Stoffe der Formel **(I)** in Frage,

**R¹(OCHCHR²)ₙOH** **(I)**

in der R¹ für Alkylreste mit 1 bis 4 Kohlenstoffatomen, R² für Wasserstoff oder eine Methylgruppe und n für Zahlen von 1 bis 10 steht. Vorzugsweise handelt es sich dabei um Methylpolyethylenglykole. Weiterhin bevorzugt ist der Einsatz von Alkylpolyalkylenglykolen, speziell Alkylpolyethylenglykolen der Formel **(I)**, die ein durchschnittliches Molekulargewicht von 200 bis 2.000 und insbesondere 500 bis 1.000 Dalton aufweisen. Zur Herstellung der Ester empfiehlt es sich, die Polyacrylsäureverbindungen und die Alkylpolyalkylenglycole im molaren Verhältnis 2:1 bis 5 : 1, vorzugsweise 3: 1 bis 4:1 einzusetzen. Die Reaktionstemperatur kann dabei 100 bis 200 und vorzugsweise etwa 120 bis 180 °C betragen. Außerdem empfiehlt es sich hier, mit vermindertem Druck zu arbeiten und das entstehende Kondensationswasser kontinuierlich aus dem Gleichgewicht zu entfernen. Im Anschluss an die Veresterung werden die Polymere mit wässrigen Alkalihydroxiden, wie beispielsweise Natrium- oder Kaliumhydroxid auf einen pH-Wert im Bereich von 6 bis 8 eingestellt. Auf diese Weise werden klare bis milchig-trübe Lösungen erhalten, die einen Feststoffgehalt im Bereich von 35 bis 55 Gew.% aufweisen.

### Gewerbliche Anwendbarkeit

Ein weiterer Gegenstand der Erfindung betrifft die Verwendung der neuen Anionpolymeren als viskositätsregulierende bzw. abbindeverzögernde Zusätze zu wässrigen Zementzubereitungen bzw. Beton, in denen sie in Mengen von 0,01 bis 1, vorzugsweise 0,1 bis 0,5 Gew.-%bezogen auf den Feststoffgehalt der Zubereitungen - enthalten sein können.

### Beispiele

### Beispiel H1

*(A) Herstellung der vernetzten Polyacrylsäure*. In einem Polymerisationsreaktor wurden 25,2 g Acrylsäure, 1,6 g Dipropylenglycoldiacrylat (DPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105 °C an. Nachdem ein langsames Absinken anzeigte, dass die Reaktion abgeschlossen war, wurde Wasser zugegeben, so dass eine milchig-weiße Dispersion mit einem Feststoffgehalt von 52 Gew.-% und einer Säurezahl von 265 resultierte. *(B) Herstellung des Polyacrylsäureesters*. 300 g (1,42 Mol) der nach (A) hergestellten vernetzten Polyacrylsäure wurden zusammen mit 300 g (0,4 Mol) methylverschlossenem Polyethylenglykol (Molgewicht 750) und 6 g p-Toluolsulfonsäure in einem Reaktor vorgelegt und langsam auf 120 °C erhitzt. Das bei der Reaktion entstandene Wasser wurde unter Anlegen eines leichten Vakuums kontinuierlich entfernt. Nach Abschluss der Wasserabscheidung wurde die Mischung 3 h bei 180 °C gerührt, wobei eine Abnahme der Säurezahl von 167 auf 116 zu beobachten war. Die resultierende dunkel gefärbte Flüssigkeit wurde mit 40 Gew.-%iger Natronlauge neutralisiert und mit Wasser auf einen Feststoffgehalt von 46 Gew.-% verdünnt.

### Beispiel H2

*(A) Herstellung der vernetzten Polyacrylsäure*. In einem Polymerisationsreaktor wurden 25,4 g Acrylsäure, 0,8 g Tripropylenglycoldiacrylat (TPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105 °C an. Nachdem ein langsames Absinken anzeigte, dass die Reaktion abgeschlossen war, wurde Wasser zugegeben, so dass eine Dispersion mit einem Feststoffgehalt von 37 Gew.-% und einer Säurezahl von 203 resultierte. *(B) Herstellung des Polyacrylsäureesters.* 433 g (1,57 Mol) der nach (A) hergestellten vernetzten Polyacrylsäure wurden zusammen mit 150 g (0,2 Mol) methylverschlossenem Polyethylenglykol (Molgewicht 750) und 3 g p-Toluolsulfonsäure in einem Reaktor vorgelegt und auf 120 °C erhitzt. Das bei der Reaktion entstandene Wasser wurde unter Anlegen einen leichten Vakuums kontinuierlich entfernt. Nach Abschluss der Wasserabscheidung wurde die Mischung 3 h bei 180 °C gerührt. Die dunkel gefärbte Flüssigkeit wurde mit 40 Gew.-%iger Natronlauge neutralisiert, mit Wasser auf einen Feststoffgehalt von 46 Gew.-% verdünnt und wies eine Säurezahl von 219 auf.

### Beispiel H3

*(A) Herstellung der vernetzten Polyacrylsäure*. In einem Polymerisationsreaktor wurden 300 g Wasser vorgelegt, auf 100 °C erhitzt und dann 30 min mit Stickstoff gespült. Anschließend wurden 272 g einer Mischung aus Acrylsäure und Methacrylsäure im Molverhältnis 1:1 sowie 48 g Acrylamidomethylpropansulfonsäure (AMPA) hinzugegeben. Unter starkem Rühren wurden innerhalb von 4 h 9,8 g Wasserstoffperoxid, 28 g Thioglycolsäure und 100 g Wasser hinzugegeben. Die Mischung wurde weitere 2 h bei 100 °C gerührt, dann abgekühlt und mit Wasser verdünnt, so dass eine Dispersion mit einem Feststoffgehalt von etwa 36 Gew.-% und einer Säurezahl von 105 resultierte. *(B) Herstellung des Polyacrylsäureesters*. 442 g (1,52 Mol) der nach (A) hergestellten vernetzten Poly(meth)acrylsäure wurden zusammen mit 300 g (0,4 Mol) methylverschlossenem Polyethylenglykol (Molgewicht 750) und 6 g p-Toluolsulfonsäure in einem Reaktor vorgelegt und auf 120 °C erhitzt. Das bei der Reaktion entstandene Wasser wurde unter Anlegen einen leichten Vakuums kontinuierlich entfernt. Nach Abschluss der Wasserabscheidung wurde die Mischung 3 h bei 180 °C gerührt. Die dunkel gefärbte Flüssigkeit wurde mit 40 Gew.-%iger Natronlauge neutralisiert und mit Wasser auf einen Feststoffgehalt von 46 Gew.-% verdünnt.

### Beispiel H4

*(A) Herstellung der vernetzten Polyacrylsäure*. In einem Polymerisationsreaktor wurden 350 g Wasser vorgelegt, auf 85 °C erhitzt und dann 30 min mit Stickstoff gespült. Anschließend wurden 358 g Acrylsäure und 40 g Acrylsäureethylester hinzugegeben. Unter starkem Rühren wurden innerhalb von 2 h 9,8 g Wasserstoffperoxid, 12,5 g Propylmercaptat und 120 g Wasser hinzugegeben. Die Mischung wurde eine weitere h bei 85 °C gerührt, dann abgekühlt, mit wässriger Natriumhydroxidlösung auf pH 7,5 eingestellt und mit Wasser verdünnt, so dass eine Dispersion mit einem Feststoffgehalt von etwa 40 Gew.-% resultierte. *(B) Herstellung des Polyacrylsäureesters*. 480 g (1,55 Mol) des nach (A) hergestellten vernetzten Polyacrylsäure/acrylsäureesters wurden zusammen mit 300 g (0,4 Mol) methylverschlossenem Polyethylenglykol (Molgewicht 750) und 6 g p-Toluolsulfonsäure in einem Reaktor vorgelegt und auf 120 °C erhitzt. Das bei der Reaktion entstandene Wasser wurde unter Anlegen einen leichten Vakuums kontinuierlich entfernt. Nach Abschluss der Wasserabscheidung wurde die Mischung 3 h bei 180 °C gerührt. Die dunkel gefärbte Flüssigkeit wurde mit 40 Gew.-%iger Natronlauge neutralisiert und mit Wasser auf einen Feststoffgehalt von 46 Gew.-% verdünnt.

### Anwendungstechnische Untersuchungen

100 g handelsüblicher Portlandzement wurden mit Wasser im Gewichtsverhältnis 4 : 1 vermischt und 10 min intensiv gerührt, bis eine zähflüssige Masse entstand. Anschließend wurden die verschiedenen Viskositätsregulatoren zugesetzt und weitere 5 min gerührt. Die Viskosität der so erhaltenen Zubereitungen wurde nach der Brookfield-Methode in einem RVT-Viskosimeter (5 Upm, 20 °C, Spindel 1 mit Helipath) bestimmt. Eine weitere Charakterisierung erfolgte im sogenannten Zylindertest. Dazu wurde ein Aluminiumzylinder mit einer Höhe von 65 mm und einem Außendurchmesser von 90 mm bis zum Rand mit den pastenartigen Zementzubereitungen gefüllt. Anschließend wurde der Zylinder entfernt, wodurch die Masse der Schwerkraft folgend mehr oder minder schnell ihre Form verlor und verlief. Bestimmt wurde der maximale Durchmesser, den die verlaufende Masse innerhalb von 10 s nach Entfernen der Form aufwies. Dabei wird als optimal ein Durchmesser von 18 bis 22 cm angesehen, da dies eine Zubereitung charakterisiert, deren Viskosität so niedrig ist, dass sie leicht verarbeitet werden kann, jedoch hoch genug ist, um nicht sofort aus der Form zu laufen. Alle Ergebnisse sind in Tabelle 1 zusammengefasst. Die Beispiele 1 bis 6 sind erfindungsgemäß, die Beispiele V1 bis V3 dienen zum Vergleich.

**Tabelle 1**

| **Anwendungstechnische Untersuchungen (Konzentration Gew.-% bezogen auf Zementmenge)** | | | | |
|---|---|---|---|---|
| **Bsp.** | **Produkt** | **Konzentration** | **Viskosität** **cps** | **Durchmesser** **cm** |
| 1 | gemäß Bsp.1 | 0,1 | 40 | 19 |
| 2 | | 0,3 | 10 | 25 |
| 3 | | 0,5 | 5 | 26 |
| 4 | gemäß Bsp.2 | 0,1 | 40 | 20 |
| 5 | | 0,3 | 10 | 22 |
| 6 | | 0,5 | 5 | 24 |
| V1 | Olinor SP 10 ¹⁾ | 0,1 | 55 | 7 |
| V2 | | 0,3 | 20 | 15 |
| V3 | | 0,5 | 5 | 25 |

| | | | | |
|---|---|---|---|---|
| 1) Anionpolymer auf Melaminbasis (Cognis Iberia, S.L.) | | | | |

Man erkennt, dass die erfindungsgemäßen neuen Anionpolymere im Vergleich mit einem Handelsprodukt des Stands der Technik bei gleichen Einsatzmengen zu einer niedrigeren Viskosität der Zubereitungen führen. Gleichzeitig ist die Viskosität aber noch hoch genug, um den Pasten eine ausreichende Stabilität zu verleihen.

## Patentansprüche

1. Anionpolymere, **dadurch** erhältlich, dass man
(a) olefinisch ungesättigte Carbonsäuren mit Comonomeren aus der Gruppe umfassend
(a1) Dipropylenglycoldiacrylat (DPGDA),
(a2) Tripropylenglycoldiacrylat (TPGDA),
(a3) Acrylamidomethylpropansulfonsäure (AMPS), und/oder
(a4) Acrylsäureethylester (AE), polymerisiert,
(b) die resultierenden Copolymeren mit Alkylpolyalkylenglykolen verestert und
(c) die so erhaltenen Ester mit Basen auf einen pH-Wert von 6 bis 8 eingestellt.

2. Verfahren zur Herstellung von Anionpolymeren, bei dem man
(a) olefinisch ungesättigte Carbonsäuren mit Comonomeren aus der Gruppe umfassend
(a1) Dipropylenglycoldiacrylat (DPGDA),
(a2) Tripropylenglycoldiacrylat (TPGDA),
(a3) Acrylamidomethylpropansulfonsäure (AMPS), und/oder
(a4) Acrylsäureethylester (AE), polymerisiert und
(b) die resultierenden Copolymern mit Alkylpolyalkylenglykolen verestert und
(c) die so erhaltenen Ester anschließend mit Basen auf einen pH-Wert von 6 bis 8 eingestellt.

3. Verfahren nach Anspruch 2, **dadurch gekennzeichnet, dass** man als olefinisch ungesättigte Carbonsäure Acrylsäure, Methacrylsäure oder deren Gemische einsetzt.

4. Verfahren nach mindestens einem der Ansprüche 2 bis 3, **dadurch gekennzeichnet, dass** man die olefinisch ungesättigte Komponente und die Comonomeren im Gewichtsverhältnis 90 : 10 bis 99 : 1 einsetzt.

5. Verfahren nach mindestens einem der Ansprüche 2 bis 4, **dadurch gekennzeichnet, dass** man Alkylpolyalkylenglykole der Formel **(I)** einsetzt,
**R¹(OCHCHR²)ₙOH** **(I)**
in der R¹ für Alkylreste mit 1 bis 4 Kohlenstoffatomen, R² für Wasserstoff oder eine Methylgruppe und n für Zahlen von 1 bis 10 steht.

6. Verfahren nach mindestens einem der Ansprüche 2 bis 5, **dadurch gekennzeichnet, dass** man Methylpolyethylenglykole einsetzt.

7. Verfahren nach mindestens einem der Ansprüche 2 bis 6, **dadurch gekennzeichnet, dass** man Alkylpolyalkylenglykole der Formel (I) einsetzt, die ein durchschnittliches Molekulargewicht von 200 bis 2.000 Dalton aufweisen.

8. Verfahren nach mindestens einem der Ansprüche 2 bis 7, **dadurch gekennzeichnet, dass** man Copolymere herstellt, die ein mittleres Molekulargewicht im Bereich von 1.000 bis 5.000 Dalton aufweisen.

9. Verfahren nach mindestens einem der Ansprüche 2 bis 8, **dadurch gekennzeichnet, dass** man die Polymere mit wässrigen Alkalihydroxiden auf einen pH-Wert im Bereich von 6 bis 8 einstellt.

10. Verfahren nach mindestens einem der Ansprüche 2 bis 9, **dadurch gekennzeichnet, dass** man wässrige, neutralisierte Zubereitungen der Polymere herstellt, die einen Feststoffgehalt im Bereich von 40 bis 50 Gew.-% aufweisen.

11. Verwendung von Anionpolymeren nach Anspruch 1 als viskositätsregulierende Zusätze zu wässrigen Zementzubereitungen bzw. Beton.

12. Verwendung von Anionpolymeren nach Anspruch 1 als abbindeverzögernde Zusätze zu wässrigen Zementzubereitungen bzw. Beton.

## Claims

1. Anionic polymers, obtainable by
(a) polymerizing olefinically unsaturated carboxylic acids with comonomers from the group consisting of
(a1) dipropylene glycol diacrylate (DPGDA),
(a2) tripropylene glycol diacrylate (TPGDA),
(a3) acrylamidomethylpropanesulphonic acid (AMPS), and/or
(a4) ethyl acrylate (EA),
(b) esterifying the resulting copolymers with alkylpolyalkylene glycols and
(c) adjusting the esters thus obtained to a pH of 6 to 8 with bases.

2. Process for the preparation of anionic polymers, in which
(a) olefinically unsaturated carboxylic acids are polymerized with comonomers from the group consisting of
(a1) dipropylene glycol diacrylate (DPGDA),
(a2) tripropylene glycol diacrylate (TPGDA),
(a3) acrylamidomethylpropanesulphonic acid (AMPS), and/or
(a4) ethyl acrylate (EA), and
(b) the resulting copolymers are esterified with alkylpolyalkylene glycols and
(c) the esters thus obtained are then adjusted to a pH of 6 to 8 with bases.

3. Process according to Claim 2, **characterized in that** acrylic acid, methacrylic acid or mixtures thereof is or are used as the olefinically unsaturated carboxylic acid.

4. Process according to at least one of Claims 2 to 3, **characterized in that** the olefinically unsaturated component and the comonomers are used in the weight ratio of 90:10 to 99:1.

5. Process according to at least one of Claims 2 to 4, **characterized in that** alkylpolyalkylene glycols of the formula **(I)**
**R¹(OCHCHR²)ₙOH** **(I)**
in which R¹ represents alkyl radicals having 1 to 4 carbon atoms, R² represents hydrogen or a methyl group and n represents numbers from 1 to 10, are used.

6. Process according to at least one of Claims 2 to 5, **characterized in that** methylpolyethylene glycols are used.

7. Process according to at least one of Claims 2 to 6, **characterized in that** alkylpolyalkylene glycols of the formula **(I)** which have an average molecular weight of 200 to 2000 dalton are used.

8. Process according to at least one of Claims 2 to 7, **characterized in that** copolymers which have an average molecular weight in the range from 1000 to 5000 dalton are prepared.

9. Process according to at least one of Claims 2 to 8, **characterized in that** the polymers are adjusted to a pH in the range from 6 to 8 with aqueous alkali metal hydroxides.

10. Process according to at least one of Claims 2 to 9, **characterized in that** aqueous, neutralized formulations of the polymers which have a solids content in the range from 40 to 50% by weight are prepared.

11. Use of anionic polymers according to Claim 1 as viscosity-regulating additives to aqueous cement formulations or concrete.

12. Use of anionic polymers according to Claim 1 as setting-retarding additives to aqueous cement formulations or concrete.

## Revendications

1. Polymères anioniques, pouvant être obtenus par
a) polymérisation d'acides carboxyliques à insaturation oléfinique avec des comonomères choisis dans le groupe comprenant
(a1) le diacrylate de dipropylèneglycol (DPGDA),
(a2) le diacrylate de tripropylèneglycol (TPGDA),
(a3) l'acide acrylamidométhylpropanesulfonique (AMPS), et/ou
(a4) l'acrylate d'éthyle (AE),
(b) estérification des copolymères résultants par des alkylpolyalkylèneglycols et
(c) ajustement à un pH de 6 à 8, à l'aide de bases, des esters ainsi obtenus.

2. Procédé pour la préparation de polymères anioniques, dans lequel
a) on polymérise des acides carboxyliques à insaturation oléfinique avec des comonomères choisis dans le groupe comprenant
(a1) le diacrylate de dipropylèneglycol (DPGDA),
(a2) le diacrylate de tripropylèneglycol (TPGDA),
(a3) l'acide acrylamidométhylpropanesulfonique (AMPS), et/ou
(a4) l'acrylate d'éthyle (AE),
(b) on estérifie les copolymères résultants par des alkylpolyalkylèneglycols et
(c) on ajuste à un pH de 6 à 8, à l'aide de bases, les esters ainsi obtenus.

3. Procédé selon la revendication 2, **caractérisé en ce qu'**on utilise comme acide carboxylique à insaturation oléfinique l'acide acrylique, l'acide méthacrylique ou des mélanges de ceux-ci.

4. Procédé selon au moins l'une des revendications 2 et 3, **caractérisé en ce qu'**on utilise le composant à insaturation oléfinique et les comonomères en un rapport pondéral de 90:10 à 99:1.

5. Procédé selon au moins l'une des revendications 2 à 4, **caractérisé en ce qu'**on utilise des alkylpolyalkylèneglycols de formule **(I),**
**R¹(OCHCHR²)ₙOH** **(I)**
dans laquelle R¹ représente des radicaux alkyle ayant de 1 à 4 atomes de carbone, R² représente un atome d'hydrogène ou un groupe méthyle et n représente les nombres allant de 1 à 10.

6. Procédé selon au moins l'une des revendications 2 à 5, **caractérisé en ce qu'**on utilise des méthylpolyéthylèneglycols.

7. Procédé selon au moins l'une des revendications 2 à 6, **caractérisé en ce qu'**on utilise des alkylpolyalkylèneglycols de formule **(I),** qui ont une masse moléculaire moyenne de 200 à 2 000 daltons.

8. Procédé selon au moins l'une des revendications 2 à 7, **caractérisé en ce qu'**on prépare des copolymères qui présentent une masse moléculaire moyenne dans la plage de 1 000 à 5 000 daltons.

9. Procédé selon au moins l'une des revendications 2 à 8, **caractérisé en ce qu'**on ajuste les polymères à un pH dans la plage de 6 à 8 à l'aide de solutions aqueuses d'hydroxydes de métaux alcalins.

10. Procédé selon au moins l'une des revendications 2 à 9, **caractérisé en ce qu'**on prépare des compositions aqueuses neutralisées des polymères qui ont une teneur en matière solide dans la plage de 40 à 50 % en poids.

11. Utilisation de polymères anioniques selon la revendication 1, en tant qu'additifs réglant la viscosité, destinés à être ajoutés à du béton ou à des compositions aqueuses de ciment.

12. Utilisation de polymères anioniques selon la revendication 1, en tant qu'additifs retardant la prise, destinés à être ajoutés à du béton ou à des compositions aqueuses de ciment.
